# EUROPÄISCHE PATENTSCHRIFT

(11) **EP 1 624 077 B1**
(45) Veröffentlichungstag und Bekanntmachung des Hinweises auf die Patenterteilung: **22.09.2010**
(21) Anmeldenummer: 05016031.6
(22) Anmeldetag: 23.07.2005
(51) Int. Cl.: C21D 1/10, C21D 9/30, H05B 6/10

(54) **Verfahren und Vorrichtung zum Härten zylindrischer Lagerstellen einer Welle**
Process and apparatus for hardening cylindrical bearing locations on a shaft
Dispositif et procédé pour durcir des zones d'appui cylindriques d'un arbre

(30) Priorität: 06.08.2004 US 913244
(43) Veröffentlichungstag der Anmeldung: 08.02.2006
(73) Patentinhaber: Maschinenfabrik Alfing Kessler GmbH, 73433 Aalen-Wasseralfingen (DE)
(72) Erfinder: Zahn, Andreas, 79359 Riegel (DE); Gerbeth, Ralph, 73460 Hüttlingen (DE)
(74) Vertreter: Lorenz, Werner

(56) Entgegenhaltungen:
- DE-A1- 1 483 016
- DE-A1- 3 923 673
- DE-C1- 3 623 119
- DE-C1- 19 808 763

## Beschreibung

Die Erfindung betrifft eine Vorrichtung zum Härten zylindrischer Lagerstellen einer Welle, insbesondere einer Kurbelwelle, bei der Übergangsradien zu den angrenzenden Wellenteilen hinterstochen ausgebildet sind. Die Erfindung betrifft auch ein Verfahren zum Härten derartiger zylindrischer Lagerstellen.

In der DE 39 23 673 A1 ist eine induktive Härtevorrichtung für Kurbelwellen mit hinterzogenen Radien offenbart, mit einer feststehenden und einer beweglichen Leiterschlaufe. Die bewegliche Leiterschlaufe wird vor dem Härten auf den benötigten Abstand bezüglich der Gesamtbreite der erforderlichen Härtezone verstellt.

In der DE 198 08 763 C1 ist eine Vorrichtung zum Härten zylindrischer Lagerstellen einer Welle dargestellt und beschrieben, wobei zwei voneinander unabhängige Erwärmungseinheiten mit jeweils einem Induktor vorgesehen sind. Jeder Induktor ist dabei mit zwei auf Abstand voneinander angeordneten Heizleiterarmen versehen. Jeder der beiden Heizleiterarme weist einen äußeren Heizleiterast und einem inneren Heizleiterast auf. Mit den inneren Heizleiterästen wird die Lauffläche der zu härtenden Lagerstelle gehärtet und mit den äußeren Heizleiterästen werden die hinterstochenen Übergangsradien gehärtet. Zur Härtung der hinterstochenen Übergangsradien werden die beiden Induktoren jeweils nach einem radialen Zustellen in axialer Richtung - bezogen auf die zu härtende Lagerstelle bzw. Welleverschoben, damit die Heizleiteräste entsprechend in die hinterstochenen Übergangsradien eingeführt werden können. Damit im mittleren Bereich der Lauffläche keine ungehärtete oder ungenügend gehärtete Stellen entstehen, müssen sich die inneren Heizleiteräste in Umfangsrichtung betrachtet in einem Überlappungsbereich überdecken, ohne sich jedoch zu berühren. Durch die beiden unabhängig voneinander operierenden Erwärmungseinheiten mit ihren Induktoren kann auf störungsanfällige Anschlüsse der elektrischen Verbindungen der Induktoren und der ihnen jeweils zugeordneten Erwärmungseinheit sowie der Kühlmittelversorgung verzichtet werden. Nachteilig dabei ist jedoch, dass die Vorrichtung durch die Verdoppelung der Erwärmungseinheiten mit ihren beiden Induktoren im Vergleich zum Stand der Technik ein relativ hoher apparateseitiger Aufwand benötigt. Darüber hinaus sind bei der axialen Zustellung der äußeren Heizleiterarme relativ hohe Massen zu bewegen, wodurch ebenfalls ein höherer Aufwand nebst Störanfälligkeit gegeben ist.

Der vorliegenden Erfindung liegt daher die Aufgabe zugrunde unter Vermeidung von störungsanfälligen Anschlüssen der elektrischen Verbindungen und bei verringertem apparativem Aufwand eine Härtevorrichtung und ein Härteverfahren zu schaffen, mit dem auf konstruktiv einfache Weise und ohne Notwendigkeit einer zweiten Erwärmungseinheit auch hinterstochen ausgebildete Übergangsradien gehärtet werden können.

Erfindungsgemäß wird diese Aufgabe dadurch gelöst, dass eine Erwärmungseinheit, die mit einer Stromversorgung verbunden ist, einen Induktor aufweist, der zwei beabstandet voneinander angeordnete und jeweils in Umfangsrichtung der zu härtenden Lagerstelle verlaufende Heizleiterarme aufweist, wobei jeder der beiden Heizleiterarme einen inneren Laufflächenhärtungsast und zwei äußere Radienhärtungsäste aufweist, wobei jeweils der Laufflächenhärtungsast mit den Radienhärtungsästen durch elastische Stromführungsglieder, die die Radienhärtungsäste tragen, mechanisch verbunden ist, wobei die mechanische Verbindung jedoch derart elastisch ist, dass die Radienhärtungsäste relativ zu dem Laufflächenhärtungsast in axialer Richtung der zu härtenden Welle verschiebbar sind.

Im Unterschied zum Stand der Technik, wobei zwei Erwärmungseinheiten mit zwei Induktoren vorgesehen sind, die komplett als ganze Einheiten in axialer Richtung zum Einführen der Radienhärtungsäste in die hinterstochenen Übergangsradien verschoben werden mussten, kommt man bei der erfindungsgemäßen Lösung mit nur einer einzigen Erwärmungseinheit nebst dazugehörigen Induktor aus. Erfindungsgemäß wird dabei die axiale Verschiebbarkeit der Radienhärtungsäste zu deren Einführung in die Übergangsradien dadurch erreicht, dass die Stromführungsglieder entsprechend elastisch sind, und damit die erforderliche Relativbewegung ermöglichen. Anstelle von Stromkabeln als Stromführungsglieder sind die Stromführungsglieder nunmehr erfindungsgemäß so ausgebildet, dass sie gleichzeitig auch die Radienhärtungsäste tragen. Trotzdem sind sie derart ausgestaltet, dass sie axiale Verschiebebewegungen zulassen. Im Unterschied zum Stand der Technik muss somit nicht mehr die gesamte Erwärmungseinheit mit dem Induktor verschoben werden, sondern es werden lediglich die Radienhärtungsäste axial relativ zu dem dazugehörigen Laufflächenhärtungsast und damit auch dem dazugehörigen Induktor verschoben, damit sie in die Übergangsradien eintauchen können. Auf diese Weise sind wesentlich geringere Massen zu bewegen, was sowohl den konstruktiven Aufwand als auch die Störanfälligkeit reduziert.

Um die erforderliche Elastizität der Stromführungsglieder zu erreichen, sind verschiedene Ausgestaltungen möglich.

Eine vorteilhafte Ausgestaltung kann darin bestehen, dass Stromführungsglieder annähernd die Form einer Schleife aufweisen, wobei jeweils die Enden der Schleifen mit dem Laufflächenhärtungsast und den Radienhärtungsästen verbunden sind und sich die Schleife zwischen beiden Enden in radialer Richtung -bezogen auf die Welle- erstreckt.

Durch die Ausgestaltung der Stromführungsglieder jeweils in Form einer Schleife, die vorzugsweise die Form einer Stimmgabel aufweisen kann, lässt sich in Verbindung mit einer entsprechenden Materialauswahl, eine ausreichende Elastizität für eine axiale Verschiebung der Radienhärtungsäste erreichen. Im allgemeinen wird für die Stromführungsglieder Kupfer verwendet, welches eine entsprechende Elastizität besitzt.

Wenn in einer sehr vorteilhaften Ausgestaltung die Stromführungsglieder als Hohlprofile ausgebildet sind, vorzugsweise in Rohr-, Platten- oder Leistenform, kann im Inneren der Stromführungsglieder gleichzeitig auch Kühlmittel zu- und abgeführt werden. Auf diese Weise werden separate Kühlmittelleitungen eingespart.

Die Verschiebung der Radienhärtungsäste in axialer Richtung kann auf verschiedene Weise erfolgen. Hierfür sind zum Beispiel Verschiebeeinrichtungen mit mechanischen Verschiebegliedern möglich, vorzugsweise eine Keil- oder Kniehebeleinrichtung, durch die die beiden Radienhärtungsäste eines Heizleiterarmes gegenüber dem dazwischen liegenden Laufflächenhärtungsast gemeinsam verschoben werden können.

Selbstverständlich sind jedoch auch hydraulische, pneumatische oder elektrische Verschiebeglieder möglich.

In vorteilhafter Weise wird man die Verschiebeeinrichtung mit Rückstellgliedern versehen, die nach Beendigung des Härtungsvorgangs die Radienhärtungsäste wieder in ihre Ausgangsstellung zurückbewegen; d.h. aus den hinterstochenen Übergangsradien heraus bewegen, sofern sich diese nicht selbständig aufgrund der Elastizität der Stromführungsglieder in ihre Ausgangsstellungen zurückbewegen.

Vorteilhafte Weiterbildungen und Ausgestaltungen ergeben sich aus dem nachfolgend anhand der Zeichnung prinzipmäßig beschriebenen Ausführungsbeispiel.

Es zeigt:
- Fig. 1: eine Übersichtsdarstellung einer Vorrichtung zum Härten zylindrischer Lagerstellung mit einer Erwärmungseinheit und einem Induktor,
- Fig. 2: eine vergrößerte Darstellung des Induktors mit einem Heizleiterarm gemäß Fig. 1,

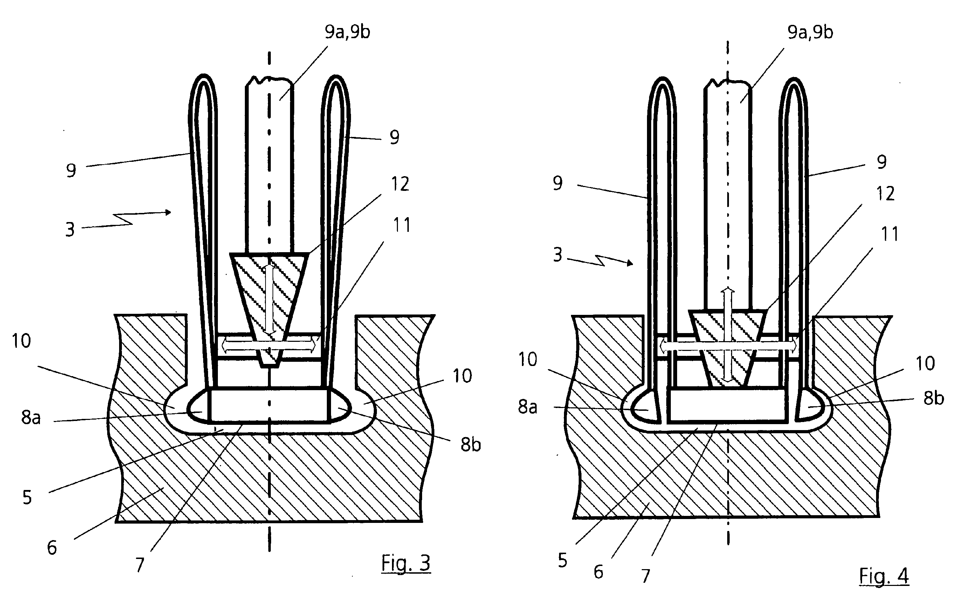

- Fig. 3: eine vergrößerte Darstellung des Induktors mit einem Heizleiterarm im eingeschobenen Zustand,
- Fig. 4: eine vergrößerte Darstellung des Induktors mit einem Heizleiterarm im eingeschobenen Zustand und mit axial ausgefahrenen Radienhärtungsästen,
- Fig. 5: eine Prinzipdarstellung der erfindungsgemäßen Vorrichtung mit der Strom- und Wasserführung in dem Induktor in der Draufsicht, und
- Fig. 6: eine Ansicht der erfindungsgemäßen Vorrichtung aus axialer Richtung.

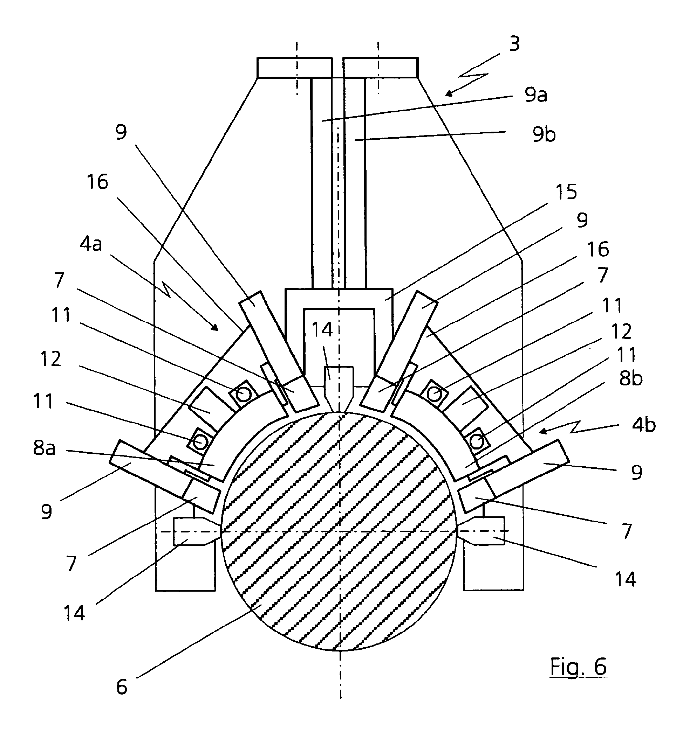

Grundsätzlich ist die nachfolgend dargestellte Vorrichtung zum Härten zylindrischer Lagerstellen einer Welle, insbesondere einer Kurbelwelle, von bekannter Bauart, weshalb nachfolgend nur auf die erfindungsgemäß wesentlichen Teile näher eingegangen wird. Bezüglich Aufbau und Wirkungsweise einer Vorrichtung und eines Verfahrens zum Härten wird beispielsweise auf die DE 198 08 763 verwiesen. Die Vorrichtung zum Härten weist eine Erwärmungseinheit 1 mit einer Stromversorgungseinrichtung 2 und einen Induktor 3 auf, der mit der Stromversorgungseinrichtung 2 verbunden ist. Der Induktor weist am unteren Ende zwei Heizleiterarme 4a und 4b, auch Heizleiterschleifen genannt, auf (siehe Fig. 6), die eine zu härtende Lagerstelle 5 einer nur auszugsweise dargestellten Kurbelwelle 6 umfangsseitig umgreifen, wobei die Umgreifung weniger als 180 Grad beträgt.

Jeder Heizleiterarm 4a bzw. 4b ist mit einem Laufflächenhärtungsast 7 und zwei beidseitig von dem Laufflächenhärtungsast 7 angeordneten Radienhärtungsäste 8a und 8b versehen.

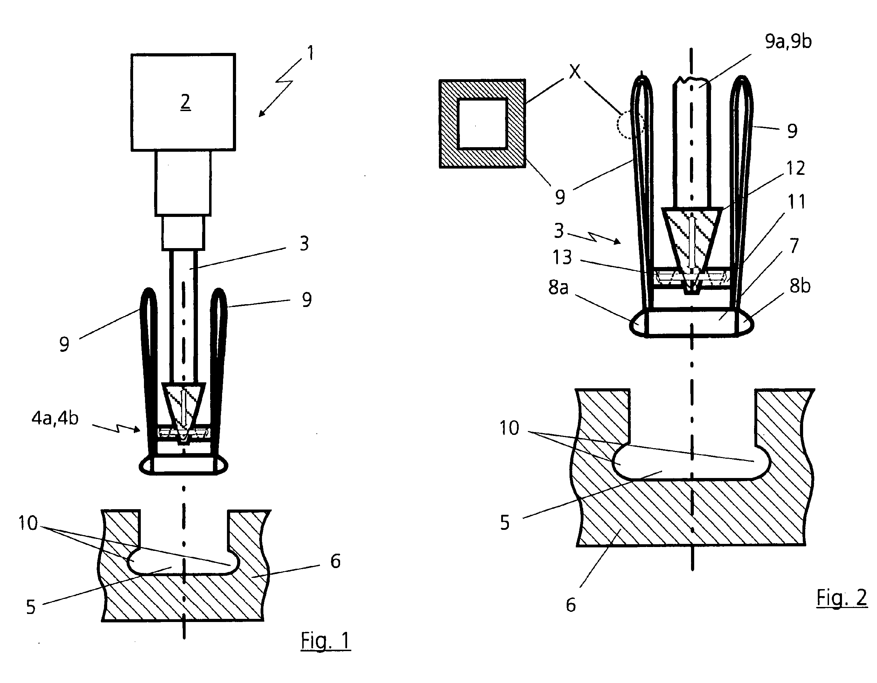

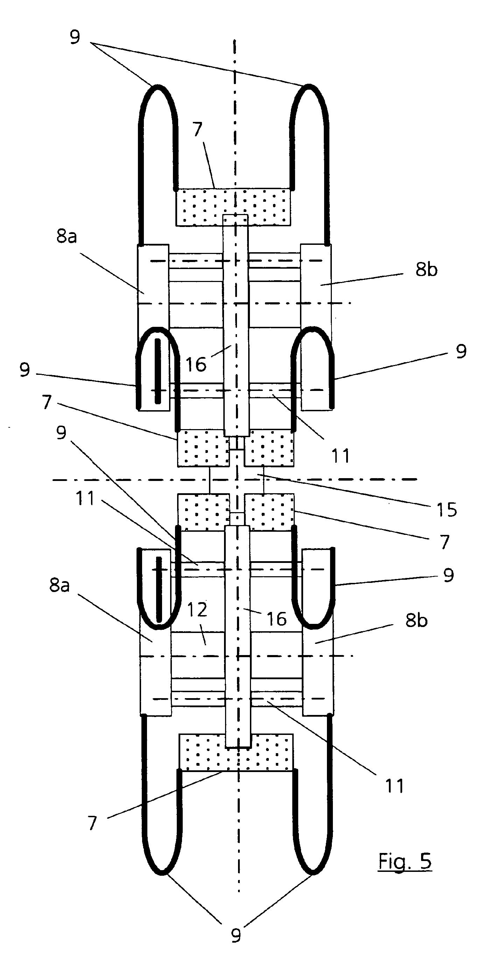

Die Verbindung zwischen dem Laufflächenhärtungsast 7 und den beiden Radienhärtungsästen 8a und 8b erfolgt über Stromführungsglieder 9. Die Stromführungsglieder 9 besitzen im Querschnitt eine Rechteck-Hohlprofilform (siehe Ausschnitt X in Fig. 2) und eine Schleifenform derart, dass ein Ende der Schleife mit dem Laufflächenhärtungsast 7 und das andere Ende mit einem Radienhärtungsast 8a oder 8b verbunden ist (siehe schematische Draufsicht bzw. Abwicklung in Fig. 5).

Wie aus den Figuren ersichtlich ist, weisen die Stromführungsglieder 9 ungefähr die Form einer Stimmgabel auf, wobei sich der Bogen bzw. die Schleife in radialer Richtung erstreckt.

Im freien Innenraum der Hohlprofilformen der Stromführungsglieder 9 wird Kühlmittel zugeführt, wozu die Stromführungsglieder 9 entsprechend mit einem Kühlmittelanschluss und einem Kühlmittelabfluss (nicht dargestellt) verbunden sind. Da die Kühlwasserzu- und -abführung im Inneren der Stromführungsglieder 9 erfolgt, ist somit in gleicher Weise auch für eine gute Kühlung gesorgt. Die Strom- und Kühlmittelzuführung erfolgt zentral über eine Zuleitung 9a, von der aus dann die Weiterleitung über die stimmgabelartigen Stromführungsglieder 9 jeweils über einen geteilten Laufflächenhärtungsast 7, den Radienhärtungsast 8b wieder auf einem Laufflächenhärtungsast 7 weiter über den Radienhärtungsast 8a und zurück auf den geteilten Laufflächenhärtungsast 7, von wo aus eine Rückführung über eine Rückleitung 9b erfolgt (siehe Figuren 5 und 6). Zur Kühlflüssigkeitsführung, welche grundsätzlich bekannt ist, sind die Laufflächenhärtungsäste 7 und die Radienhärtungsäste 8a und 8b ebenfalls als Hohlprofile ausgebildet und entsprechend mit den Stromführungsgliedern 9 verbunden.

Wie ersichtlich sind die beiden Radienhärtungsäste 8a und 8b jeweils von zwei Stromführungsgliedern 9 getragen und gleichzeitig auch mechanisch mit dem Laufflächenhärtungsast 7 verbunden. Aufgrund der Form der Stromführungsglieder 9 ist jedoch eine elastische Verbindung gegeben.

Wie insbesondere aus der Fig. 2 ersichtlich ist, weisen die beiden Heizleiterarme 4a und 4b des Induktors 3 im Ruhezustand, der dem Zustand entspricht, in welchem der Induktor 3 der zu härtenden Lagerstelle 5 angenähert wird, jeweils eine Breite auf, die maximal der Breite der Lagestelle 5 entspricht. Auf diese Weise können die Heizleiterarme 4a und 4b radial zum Härten so weit zugestellt werden, bis sie sich in ihrer Härteposition befinden. Wie weiterhin aus der Fig. 2 ersichtlich ist, weist die Lagerstelle beidseits in axialer Richtung jeweils einen hinterstochenen Übergangsradius 10 auf. Befindet sich der Induktor 3 mit den beiden Heizleiterarmen 4a und 4b in seiner Härteposition und damit im Bereich der zu härtenden Lagerstelle 5 und der beiden Übergangsradien 10, so wird eine nicht näher dargestellte Verschiebeeinrichtung 11 aktiviert, durch die die beiden Radienhärtungsäste 8a und 8b jedes Heizleiterarms 4a bzw. 4b in axialer Richtung verschoben und damit in die hinterstochenen Übergangsradien 10 eingeführt werden können. Die Verschiebeeinrichtung 11 kann z.B. ein in radialer Richtung verstellbares Teil, z.B. einen Keil 12, aufweisen, der die Stromführungsglieder 9 oder die damit verbundenen Teile bei einer radialen Verschiebung in Richtung auf die Welle 6 (siehe Pfeil) auseinanderdrückt, damit diese in die hinterstochenen Übergangsradien 10 eingeführt werden können. Auch eine Kniehebeleinrichtung zwischen den beiden Radienhärtungsästen 8a und 8b kann die beiden Radienhärtungsäste bei Betätigung der Kniehebeleinrichtung axial auseinanderfahren.

Die mechanische Verschiebeeinrichtung 11 kann zusätzlich mit einem Rückstellglied, z.B. Rückstellfederelementen 13 (siehe gestrichelte Darstellung in Fig. 2) versehen sein.

Wie aus der Fig. 5 ersichtlich ist, liegen die Radienhärtungsäste 8a und 8b aus Platz- und Bewegungsgründen in Umfangsrichtung versetzt zu dem jeweils dazu gehörigen Laufflächenhärtungast 7 zueinander.

Die Führung der beiden Halbleiterarme 4a und 4b auf der Welle 6 erfolgt in bekannter Weise über Gleitschuhe 14, welche in der Fig. 6 nur angedeutet sind. Die Verbindungen der beiden Halbleiterarme 4a und 4b erfolgt über ein U-förmiges Verbindungsglied 15. Zur Versteifung der Laufflächenhärtungsäste 7 können in Umfangsrichtung sich erstreckende Versteifungsrippen 16 vorgesehen sein.

## Patentansprüche

1. Vorrichtung zum Härten zylindrischer Lagerstellen einer Welle (6), insbesondere einer Kurbelwelle, bei denen Übergangsradien (10) zu den angrenzenden Wellenteilen hinterstochen ausgebildet sind, mit einer Erwärmungseinheit (1), die mit einer Stromversorgung (2) verbunden ist, und mit einem Induktor (3), der zwei beabstandet zueinander angeordnete und jeweils in Umfangsrichtung der zu härtenden Lagerstelle verlaufende Heizleiterarme (4a,4b) aufweist, wobei jeder der beiden Heizleiterarme (4a,4b) einen inneren Laufflächenhärtungsast (7) und zwei äußere Radienhärtungsäste (8a,8b) aufweist, **dadurch gekennzeichnet, dass** jeweils der Laufflächenhärtungsast (7) mit den Radienhärtungsästen (8a,8b) durch elastische Stromführungsglieder (9), die die Radienhärtungsäste (8a,8b) tragen, mechanisch verbunden ist, wobei die mechanische Verbindung derart elastisch ist, dass die Radienhärtungsäste (8a,8b) relativ zu dem Laufflächenhärtungsast (7) in axialer Richtung der zu härtenden Welle (6) verschiebbar sind, und die Radienhärtungsäste (8a, 8b) mit einer Verschiebeeinrichtung (11) zu *deren axialen Verschiebung versehen sind.

2. Vorrichtung nach Anspruch 1,
**dadurch gekennzeichnet, dass** Stromführungsglieder (9) annähernd die Form einer Schleife aufweisen, wobei jeweils die Enden der Schleifen mit dem Laufflächenhärtungsast (7) und den Radienhärtungsästen (8a,8b) verbunden sind und sich die Schleife zwischen beiden Enden in radialer Richtung -bezogen auf die Welle (6)- erstreckt.

3. Vorrichtung nach Anspruch 2,
**dadurch gekennzeichnet, dass** die Stromführungsglieder (9) wenigstens annähernd die Form einer Stimmgabel aufweisen.

4. Vorrichtung nach Anspruch 2 und 3,
**dadurch gekennzeichnet, dass** die Stromführungsglieder (9) als Hohlprofile ausgebildet sind.

5. Vorrichtung nach Anspruch 3 oder 4,
**dadurch gekennzeichnet, dass** die Stromführungsglieder (9) wenigstens annähernd eine Platten-, Rohr- oder Leistenform aufweisen.

6. Vorrichtung nach Anspruch 5,
**dadurch gekennzeichnet, dass** die Stromführungsglieder (9) im Querschnitt eine Rechteck-Hohlprofilform aufweisen.

7. Vorrichtung nach Anspruch 1-6,
**dadurch gekennzeichnet, dass** die Verschiebeeinrichtung (11) mechanische Verschiebeglieder aufweist.

8. Vorrichtung nach Anspruch 7,
**dadurch gekennzeichnet, dass** die Verschiebeeinrichtung (11) eine Keil- oder Kniehebeleinrichtung (12) aufweist.

9. Vorrichtung nach Anspruch 1-6;
**dadurch gekennzeichnet, dass** hydraulische, pneumatische oder elektrische Verschiebeglieder vorgesehen sind.

10. Vorrichtung nach einem der Ansprüche 1 bis 10,
**dadurch gekennzeichnet, dass** die Verschiebeeinrichtung (11) mit Rückstellgliedern (13) versehen ist.

11. Vorrichtung nach Anspruch 10,
**dadurch gekennzeichnet, dass** die Rückstellglieder (13) mit Rückstellfederelementen versehen sind.

12. Verfahren zum Härten zylindrischer Lagerstellen einer Welle (6), insbesondere einer Kurbelwelle, bei der Übergangsradien (10) zu den angrenzenden Wellenteilen hinterstochen ausgebildet sind, wobei ein mit einer Erwärmungseinheit (1) und einer Stromversorgung (2) verbundener Induktor (3), der zwei beabstandet zueinander angeordnete und jeweils in Umfangsrichtung der zu härtenden Lagerstelle verlaufende Heizleiterarme (4a,4b) aufweist, in radialer Richtung - bezogen auf die zu härtende Lagerstelle - zugeführt wird, wonach von jedem der beiden Heizleiterarme (4a,4b), die jeweils einen inneren Laufflächenhärtungsast (7) und zwei äußere Radienhärtungsäste (8a,8b) aufweisen, die Radienhärtungsäste (8a,8b), welche durch elastische Stromführungsglieder (9) getragen und über diese mit dem dazwischen liegenden Laufflächenhärtungsast (7) verbunden sind, relativ zu dem jeweiligen Laufflächenhärtungsast (7) in axialer Richtung der zu härtenden Welle (6) in die hinterstochenen
Übergangsradien (10) mittels einer Verschiebeeinrichtung (11) eintauchen, wonach während der Drehung der Welle (6) die Lagerstelle gehärtet wird.

13. Verfahren nach Anspruch 12,
**dadurch gekennzeichnet, dass** die Verbindung zwischen dem Laufflächenhärtungsast (7) und den Radienhärtungsästen (8a,8b) durch elastische Stromführungsglieder (9) erfolgt.

## Claims

1. An apparatus for hardening cylindrical bearing locations on a shaft (6), in particular a crankshaft, in which transition radii (10) to the adjacent parts of the shaft are of undercut design, having a heating unit (1) which is connected to a power supply (2), and having an inductor (3), which includes two heating conductor arms (4a, 4b) that are arranged at a distance from one another and each run in the peripheral direction of the bearing location that is to be hardened, each of the two heating conductor arms (4a, 4b) having an inner bearing-surface hardening branch (7) and two outer radius hardening branches (8a, 8b), **characterized in that** the bearing-surface hardening branch (7) in each case being mechanically connected to the radius hardening branches (8a, 8b) by current-carrying elements (9) which bear the radius hardening branches (8a, 8b), and the mechanical connection being sufficiently elastic for the radius hardening branches (8a, 8b) to be displaceable relative to the bearing-surface hardening branch (7) in the axial direction of the shaft (6) that is to be hardened, and the radius hardening branches (8a, 8b) are provided with a displacement device (11) for the axial displacement thereof.

2. The apparatus as claimed in claim 1, wherein current-carrying elements (9) approximately take the form of a loop, the ends of the loop respectively being connected to the bearing-surface hardening branch (7) and the radius hardening branches (8a, 8b), and the loop extending in the radial direction - with respect to the shaft (6) - between the two ends.

3. The apparatus as claimed in claim 2, wherein the current-carrying elements (9) are at least approximately in the shape of a tuning fork.

4. The apparatus as claimed in claims 2 and 3, wherein the current-carrying elements (9) are formed as hollow profiled sections.

5. The apparatus as claimed in claims 3 or 4, wherein the current-carrying elements (9) are at least approximately in plate, tube or strip form.

6. The apparatus as claimed in claim 5, wherein the current-carrying elements (9), in cross section, are in the form of a rectangular hollow section.

7. The apparatus as claimed in any of claims 1 to 6, wherein the displacement device (11) has mechanical displacement elements.

8. The apparatus as claimed in claim 7, wherein the displacement device (11) has a wedge or knee lever device (12).

9. The apparatus as claimed in any of claims 1 to 6, wherein hydraulic, pneumatic or electrical displacement elements are provided.

10. The apparatus as claimed in any of claims 1 to 9, wherein the displacement device (11) is provided with restoring elements (13).

11. The apparatus as claimed in claim 10, wherein the restoring elements (13) are provided with return spring elements.

12. A process for hardening cylindrical bearing locations on a shaft (6), in particular a crankshaft, in which transition radii (10) to the adjacent parts of the shaft are of undercut design, an inductor (3), which is connected to a heating unit (1) and a power supply (2) and has two heating conductor arms (4a, 4b) that are arranged at a distance from one another and each run in the peripheral direction of the bearing location to be hardened, being advanced in the radial direction - with respect to the bearing location that is to be hardened - after which, for each of the two heating conductor arms (4a, 4b), which each have an inner bearing-surface hardening branch (7) and two outer radius hardening branches (8a, 8b), the radius hardening branches (8a, 8b), which are supported by current-carrying elements (9) and are connected via the latter to the bearing-surface hardening branch (7) located between them, penetrate by means of a displacement device (11) into the undercut transition radii (10) relative to the corresponding bearing-surface hardening branch (7), in the axial direction of the shaft (6) that is to be hardened, after which the bearing location is hardened during the rotation of the shaft (6).

13. The process as claimed in claim 12, wherein the connection between the bearing-surface hardening branch (7) and the radius hardening branches (8a, 8b) is effected by elastic current-carrying elements (9).

## Revendications

1. Dispositif pour tremper des zones de portée cylindriques d'un arbre (6), en particulier d'un vilebrequin dans lesquelles des arrondis de raccordement (10) sont en sous-cavage par rapport aux parties adjacentes de l'arbre, comprenant une unité de chauffage (1) qui est reliée à une alimentation électrique (2) et un inducteur (3) qui comporte deux bras conducteurs de la chaleur (4a, 4b) écartés l'un de l'autre et s'étendant chacun dans la direction circonférentielle de la zone de portée à tremper, chacun des deux bras conducteurs de la chaleur (4a, 4b) comportant une branche intérieure (7) de trempe de la surface de roulement et deux branches extérieures (8a, 8b) de trempe des arrondis, **caractérisé en ce qu'**à chaque fois, la branche (7) de trempe de la surface de roulement est reliée mécaniquement aux branches (8a, 8b) de trempe des arrondis par des organes (9) conducteurs du courant de constitution élastique, qui portent les branches (8a, 8b) de trempe des arrondis, la liaison mécanique étant suffisamment élastique pour que les branches (8a, 8b) de trempe des arrondis puissent se déplacer en translation par rapport à la branche (7) de trempe de la surface de roulement dans la direction axiale de l'arbre à tremper (6), et les branches (8a, 8b) de trempe des arrondis étant pourvues d'un dispositif de translation (11) pour leur translation axiale.

2. Dispositif selon la revendication 1,
**caractérisé en ce que**
les organes (9) conducteurs du courant présentent approximativement la forme d'une boucle, les extrémités des boucles étant reliées respectivement à la branche (7) de trempe de la surface de roulement et aux branches (8a, 8b) de trempe des arrondis et la boucle s'étendant dans une direction radiale, relativement à l'arbre (6), entre ses deux extrémités.

3. Dispositif selon la revendication 2,
**caractérisé en ce que**
les organes (9) conducteurs du courant présentent au moins approximativement la forme d'un diapason.

4. Dispositif selon la revendication 2 et 3,
**caractérisé en ce que**
les organes (9) conducteurs du courant sont constitués par des profilés creux.

5. Dispositif selon la revendication 3 ou 4,
**caractérisé en ce que**
les organes (9) conducteurs du courant présentent au moins approximativement une forme de plaque, de tube ou de languette.

6. Dispositif selon la revendication 5,
**caractérisé en ce que**
les organes (9) conducteurs du courant présentent en section transversale une forme de profilé creux rectangulaire.

7. Dispositif selon les revendications 1-6,
**caractérisé en ce que**
le dispositif de translation (11) comporte des organes de translation mécaniques.

8. Dispositif selon la revendication 7,
**caractérisé en ce que**
le dispositif de translation (11) comporte un dispositif à coin ou à genouillère (12).

9. Dispositif selon les revendications 1-6,
**caractérisé en ce que**
il est prévu des organes de translation hydrauliques, pneumatiques ou électriques.

10. Dispositif selon l'une des revendications 1 à 9,
**caractérisé en ce que**
le dispositif de translation (11) est pourvu d'organes de rappel (13).

11. Dispositif selon la revendication 10,
**caractérisé en ce que**
les organes de rappel (13) sont pourvus d'éléments de rappel élastiques.

12. Procédé pour la trempe de surfaces de zones de portée cylindriques d'un arbre (6), en particulier d'un vilebrequin, dans lequel des arrondis de raccordement (10) sont en sous-cavage par rapport aux parties adjacentes de l'arbre et dans lequel un inducteur (3), relié à une unité de chauffage (1) et à une alimentation électrique (2) et qui comporte deux bras conducteurs de la chaleur (4a, 4b) qui s'étendent à chaque fois dans la direction circonférentielle de la zone de portée à tremper, est avancé dans la direction radiale, relativement à la zone de portée à tremper, après quoi, dans chacun des deux bras (4a, 4b) conducteurs de la chaleur qui comportent chacun une branche intérieure (7) de trempe de la surface de roulement et deux branches extérieures (8a, 8b) de trempe des arrondis, les branches (8a, 8b) de trempe des arrondis qui sont portées par des organes (9) conducteurs du courant de constitution élastique et reliées, par l'intermédiaire de ces dernières, à la branche (7) de trempe de la surface de roulement qui se trouve entre elles, plongent dans les arrondis de raccordement (10) en sous-cavage, dans la direction axiale de l'arbre à tremper (6) et relativement à la branche (7) de trempe de la surface de roulement, sous l'action d'un dispositif de translation (11), après quoi la zone de portée est trempée pendant la rotation de l'arbre (6).

13. Procédé selon la revendication 12,
**caractérisé en ce que**
la liaison entre la branche (7) de trempe de la surface de roulement et les branches (8a, 8b) de trempe des arrondis est assurée par des organes (9) conducteurs du courant de constitution élastique.
